# FASCICULE DE BREVET EUROPEEN

(11) **EP 0 694 704 B1**
(45) Date de publication et mention de la délivrance du brevet: **13.05.1998**
(21) Numéro de dépôt: 95401736.4
(22) Date de dépôt: 21.07.1995
(51) Int. Cl.: F16D 1/02, F16D 1/108, F16D 1/033

(54) **Dispositif d'accouplement de deux arbres**
Vorrichtung zur Kupplung zweier Wellen
Coupling device for two shafts

(30) Priorité: 26.07.1994 FR 9409233
(43) Date de publication de la demande: 31.01.1996
(73) Titulaire: LEMFÖRDER NACAM SA, 41100 Vendôme (FR)
(72) Inventeur: Daviau, Charles, F-41170 Sarge Sur Braye (FR); Marzio, Emmanuel, F-41100 Vendôme (FR)
(74) Mandataire: Cabinet Martinet & Lapoux

(56) Documents cités:
- EP-A- 0 021 249
- DE-C- 440 816
- FR-A- 1 087 713
- FR-A- 2 518 199
- GB-A- 917 187
- US-A- 3 220 757

## Description

La présente invention est relative à un dispositif d'accouplement de deux arbres aptes à tourner suivant un axe commun.

Le dispositif d'accouplement selon l'invention est plus particulièrement destiné à être monté sur une colonne de direction de véhicule automobile.

On connaît des dispositifs d'accouplement de deux arbres de colonne de direction de véhicules automobiles, qui mettent en oeuvre des systèmes de rattrapage de jeux nécessitant l'apport d'énergie extérieure par un ressort ou par l'opérateur. La prise de jeu du système nécessite un apport d'énergie très important, et donc un ressort avec une très forte précontrainte, ce qui est défavorable à la facilité de montage.

Par exemple, le dispositif d'accouplement selon la GB-A-917187 comprend au moins une dent, dite languette, et au moins une encoche, dite rainure, solidaires respectivement des extrémités des deux arbres, étant agencées sur un plan sensiblement perpendiculairement à l'axe commun et ayant des profils conjugués et des flans afin que la dent s'engage dans l'encoche, et des moyens élastiques, qui retiennent les faces des extrémités des arbres l'une contre l'autre.

Les moyens élastiques sont sous la forme d'une lame-ressort en U dont les branches traversent les extrémités des arbres.

Le but de la présente invention est de proposer un dispositif d'accouplement de deux arbres coaxiaux qui soit d'une grande facilité de montage dans un temps le plus réduit possible, tout en garantissant un rattrapage de jeu correct et le maintien en place de l'accouplement.

Selon l'invention, un dispositif d'accouplement des extrémités de deux arbres aptes à tourner suivant un axe commun comprenant au moins une dent et au moins une encoche solidaires respectivement des extrémités des deux arbres, s'étendant sensiblement perpendiculairement à l'axe commun, et ayant des profils conjugués afin que la dent s'engage dans l'encoche, et des moyens élastiques, est caractérisé en ce qu'il comprend en outre un manchon entourant les extrémités des deux arbres et ayant des faces d'extrémité d'appui sensiblement perpendiculaires à l'axe commun, et les moyens élastiques sont situés à l'intérieur du manchon, s'appuient sur l'une des faces d'extrémité d'appui du manchon reliée axialement à l'un des arbres, et appliquent les extrémités des deux arbres contre l'autre face d'extrémité d'appui du manchon.

Afin d'améliorer les performances de l'invention, le manchon de maintien axial est associé à un système d'armement des moyens élastiques qui permet de maintenir ces moyens élastiques en place lors de l'engagement des deux arbres l'un dans l'autre, c'est-à-dire de la dent dans l'encoche. Préférentiellement, les moyens élastiques peuvent être un ressort de compression autour de l'un des deux arbres.

Selon une réalisation de l'invention, le système d'armement comprend un moyeu à l'extrémité du manchon ayant la face d'extrémité d'appui sur laquelle s'appuient les moyens élastiques. Ce moyeu est muni d'au moins une lumière de façon qu'une goupille montée dans l'arbre correspondant débouche à travers cette lumière. Préférentiellement, la lumière comporte un secteur circulaire dont l'une des extrémités se prolonge par un retour axial qui permet de libérer le système d'armement afin de laisser les moyens élastiques de tenue axiale, appliquer les extrémités des deux arbres l'une contre l'autre en s'appuyant sur le manchon. De plus, le dispositif d'accouplement selon l'invention comporte un système anti-retour axial qui selon une réalisation préférentielle de l'invention, consiste en un ergot qui est monté dans la lumière.

De plus, le moyeu du manchon est muni de deux lumières qui sont diamétralement opposées et qui coopèrent avec la goupille.

Dans un aspect particulièrement intéressant de l'invention, le manchon a la face d'appui des extrémités des deux arbres qui est constituée par deux retours en forme de tenons d'appui qui sont diamétralement opposés. L'extrémité de chaque arbre est constituée par un plateau circulaire qui est muni de deux rainures axiales diamétralement opposées pour le passage des deux tenons d'appui du manchon. Dans cette réalisation, il est intéressant de prévoir selon l'invention, un agencement particulier de la lumière du système d'armement qui est réalisé dans le moyeu du manchon. Cet agencement consiste en ce que l'autre extrémité du secteur circulaire située à l'opposé du retour axial est munie d'une empreinte circulaire afin de pouvoir recevoir la goupille pour garantir le maintien du système d'armement.

Pour faciliter le montage, le dispositif d'accouplement selon l'invention comporte un système d'indexation qui est constitué par la détermination de la longueur axiale de l'un des plateaux circulaires s'appuyant sur les tenons d'appui, de manière que l'autre plateau circulaire étant en place avec le système d'armement mis avec la goupille dans l'arbre correspondant et dans l'empreinte circulaire de la lumière du manchon, ledit un plateau circulaire soit encore engagé dans les tenons d'appui afin que les deux plateaux circulaires se présentent convenablement l'un par rapport à l'autre, puisque les deux tenons d'appui sont encore engagés dans les rainures axiales dudit un plateau circulaire lors de la présentation de la dent dans l'encoche.

Le dispositif d'accouplement selon l'invention peut aussi comporter un système de maintien en position fermée. Le système de maintien comprend deux empreintes qui sont diamétralement opposées et qui sont ménagées sur la face externe de l'un des plateaux circulaires de manière à recevoir les deux tenons d'appui du manchon pour maintenir l'ensemble du dispositif d'accouplement en position fermée.

Afin de garantir un bon alignement des deux arbres l'un par rapport à l'autre, le dispositif d'accouplement selon l'invention comporte un système de centrage. Le système de centrage comprend un embout circulaire à l'extrémité de l'un des arbres destiné à rentrer et à s'ajuster dans un logement circulaire qui est ménagé à l'extrémité de l'autre arbre.

Dans une autre réalisation de l'invention, le système de centrage est constitué par chacun des plateaux circulaires dont la face circulaire externe s'ajuste dans une cavité cylindrique interne du manchon.

Dans une forme préférée de réalisation de l'invention, les arbres comportent deux dents diamétralement opposées et deux encoches diamétralement opposées s'engageant dans les dents.

Selon l'invention, le procédé de montage du dispositif d'accouplement de deux arbres aptes à tourner suivant un axe commun, est caractérisé en ce que le manchon est monté sur l'un des arbres avec le ressort de compression et son système d'armement en position bloquée. L'autre arbre est alors engagé axialement jusqu'à ce que les flans des dents de l'un des arbres viennent s'appliquer contre les flans des encoches correspondantes de l'autre arbre et restent ainsi en place sous l'action du système de maintien axial, après libération du système d'armement. Cette libération du système d'armement est obtenue par la rotation du manchon afin que ses deux tenons d'appui viennent s'engager dans deux empreintes qui sont ménagées dans l'extrémité de l'autre arbre pour maintenir le dispositif d'accouplement en position fermée.

De plus, le procédé de montage selon l'invention est caractérisé en ce que l'arbre portant le ressort de compression est engagé dans le manchon avec lequel il est relié par la goupille montée sur l'arbre et traversant les deux lumières aménagées sur le moyeu du manchon. Chacune des lumières comporte un secteur circulaire dont l'une des extrémités se prolonge par un retour axial et dont l'autre extrémité est munie d'une empreinte circulaire. La goupille et les deux lumières constituent le système d'armement du ressort de compression. Ce système d'armement est en position bloquée lorsque la goupille est engagée dans l'empreinte circulaire de chacune des lumières, ce qui correspond à la position de livraison. Le système d'armement est en position libre lorsque la goupille est engagée dans le retour axial de chacune des lumières, ce qui correspond à la position fermée du dispositif d'accouplement, dont le maintien est garanti par l'engagement des deux tenons d'appui du manchon dans des empreintes aménagées sur la face externe du plateau de l'arbre correspondant.

Le dispositif d'accouplement selon l'invention présente ainsi l'avantage de permettre un montage rapide, sans effort, aisé et sans aucun jeu à neuf et après usage. De plus, l'accouplement une fois réalisé, celui-ci est garanti mécaniquement. Enfin, les pièces utilisées sont relativement simples et donc peu coûteuses.

D'autres caractéristiques et avantages de l'invention ressortiront de la description qui va suivre, donnée à titre d'exemple nullement limitatif, en référence aux dessins annexés sur lesquels :
- la figure 1 est une vue axiale partiellement en coupe de l'ensemble du dispositif d'accouplement selon l'invention, le manchon étant représenté en coupe axiale ;
- la figure 2 est une vue en coupe prise le long de ligne II-II de la figure 1 ;
- la figure 3 est une vue en coupe prise le long de la ligne III-III de la figure 1, l'ensemble du dispositif d'accouplement étant en position "livraison", comme c'est le cas de la figure 1 ;
- la figure 4 est une vue en coupe analogue à la figure 3, le dispositif d'accouplement étant en position fermée;
- la figure 5 est une vue axiale analogue à la figure 1, avec le manchon en vue extérieure ;
- la figure 6 est une vue de détail de la figure 5 ;
- la figure 7 est une vue en perspective cavalière de l'ensemble du dispositif d'accouplement avant montage ;
- la figure 8 est une vue axiale de l'un des arbres avec des dents à accoupler ;
- la figure 9 est une vue arrière prise suivant la direction des flèches IX de la figure 8 ;
- la figure 10 est une vue de face prise suivant la direction des flèches X de la figure 8 ;
- la figure 11 est une vue axiale de l'autre arbre avec des encoches à accoupler ;
- la figure 12 est une vue de face prise suivant les flèches XII de la figure 11 ; et
- la figure 13 est une vue arrière prise suivant les flèches XIII de la figure 11.

Le dispositif d'accouplement selon l'invention est destiné à relier deux arbres référencés 1 et 2 qui sont aptes à tourner suivant un axe commun X-X. Le mode de réalisation de l'invention représenté sur les figures se rapporte à un dispositif d'accouplement plus particulièrement destiné à une colonne de direction de véhicule automobile. L'arbre 1 est l'arbre menant et appartient à la colonne de direction au moyen d'une mâchoire de cardan 35. L'arbre 2 est l'arbre mené et appartient à la tige du pignon du boîtier de direction.

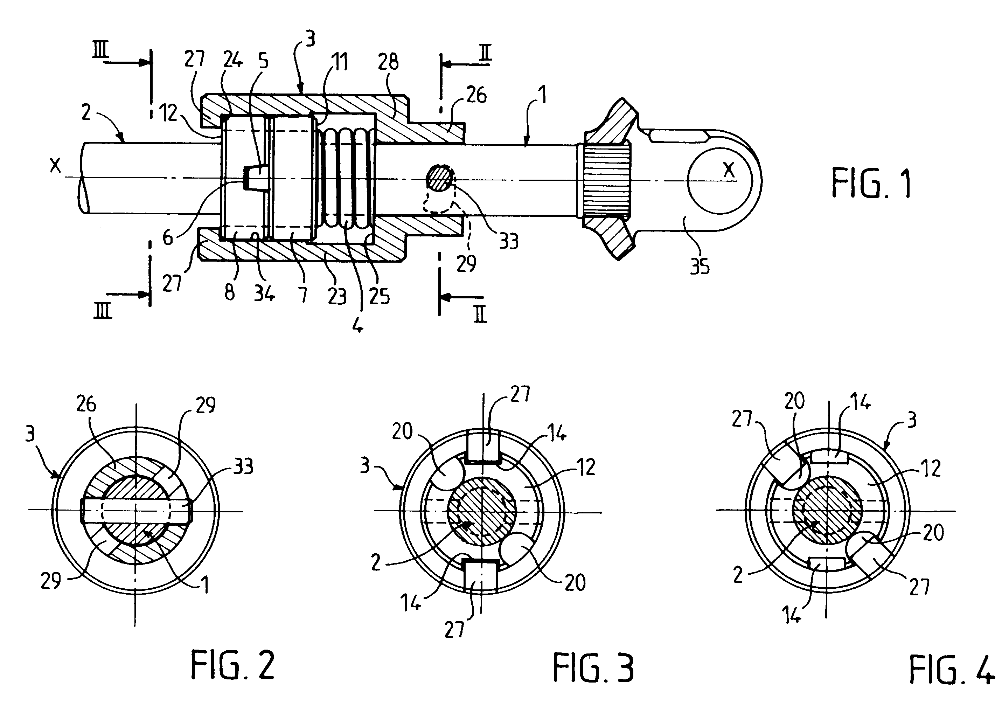

Le dispositif d'accouplement des deux arbres 1 et 2 est représenté dans son ensemble dans les figures 1, 5 et 7. Il inclut des moyens de liaison en rotation de ses deux arbres 1 et 2, qui son associés à des moyens de maintien axial.

Les moyens de liaison en rotation comprennent essentiellement :
- au moins une dent 5, qui est solidaire de l'extrémité de l'un des deux arbres à relier qui, dans le cas représenté sur les figures, est l'arbre 1, cette dent 5 étant agencée sur un plan sensiblement perpendiculaire à l'axe commun X-X ;
- et au moins une encoche 6 ménagée à l'extrémité de l'autre arbre 2 à entraîner, qui est agencée sur un plan sensiblement perpendiculaire à l'axe commun X-X.

La dent 5 et l'encoche 6 ont des profils conjugués avec des flans 17 qui sont inclinés par rapport au sommet 15 de la dent 5 et avec des flans 18 qui sont inclinés par rapport au fond 16 de l'encoche 6. Les flans 17 de la dent 5 viennent s'appliquer contre les flans 18 correspondants de l'encoche 6, après engagement axial de l'arbre 2 par rapport à l'arbre 1. Les flans 17 et 18 restent alors en place sous l'action des moyens de maintien axial.

Les moyens de maintien axial comportent un manchon 3 et des moyens élastiques constitués par un ressort de compression 4 monté à l'intérieur du manchon 3.

L'arbre menant 1 possède à son extrémité un plateau circulaire 7, avec une face interne 9 et une face externe 11. Deux dents 5 diamétralement opposées sont aménagées sur la face interne 9. L'arbre mené 2 possède également un plateau circulaire 8 avec une face interne 10 et une face externe 12. La face interne 10 possède deux encoches 6 diamétralement opposées et dont le profil correspond au profil des dents correspondantes 5 saillant sur la face interne 9 du plateau circulaire 7 appartenant à l'arbre 1.

Le manchon 3 est constitué par un corps cylindrique 23 avec un fond 28 à l'une de ses extrémités et deux tenons d'appui 27 à l'autre extrémité. Le fond de manchon 28 se prolonge par un moyeu 26. Le corps cylindrique 23 possède une face circulaire interne 34 et deux faces d'appui 24 et 25 perpendiculaires à l'axe du manchon. La face d'appui 24 est constituée par les faces internes des deux tenons d'appui 27. La face d'appui 25 est réalisée par la face interne du fond 28 du manchon. Les deux tenons d'appui 27 sont constitués par deux retours s'étendant perpendiculairement à l'axe du manchon, et diamétralement opposés l'un par rapport à l'autre, comme montré à la figure 3.

Les plateaux circulaires 7 et 8 ont des dimensions qui correspondent à la cavité cylindrique interne 34 du manchon 3. De plus, le plateau circulaire 7 de l'arbre 1 comporte deux rainures axiales 13 diamétralement opposées l'une par rapport à l'autre, dont les axes sont dans un plan perpendiculaire aux dents 5 et dont les dimensions correspondent aux deux tenons d'appui 27. De la même manière, le plateau circulaire 8 de l'arbre 2 comporte deux rainures axiales 14 diamétralement opposées l'une par rapport à l'autre, dont les axes sont dans un plan perpendiculaire aux encoches 6 et dont les dimensions correspondent aux dimensions des deux tenons d'appui 27. De plus, le manchon 3 est relié axialement à l'arbre 1 par l'intermédiaire d'une goupille 33 montée dans un trou diamétral 19 de l'arbre 1 et qui traverse le moyeu 26 du manchon 3, comme montré à la figure 2.

Les moyens élastiques inclus dans les moyens de maintien axial comportent un ressort de compression 4. Le manchon 3 entoure les extrémités des deux arbres 1 et 2, c'est-à-dire les plateaux circulaires 7 et 8, et le ressort de compression 4, qui est monté autour de l'arbre 1. Le ressort de compression 4 est appliqué contre la face d'appui 25 du fond 28 du manchon 3 et presse les deux plateaux circulaires 7 et 8, dont les dents 5 sont engagées dans les encoches 6, contre l'autre face d'appui 24 du manchon 3, qui est constituée par la face interne des deux tenons d'appui 27 qui sont en position fermée comme cela est représenté sur la figure 4.

Les moyens élastiques, c'est-à-dire le ressort de compression 4, comportent un système d'armement qui maintient en place le ressort de compression 4 lors de l'engagement des deux arbres 1 et 2 l'un dans l'autre. Ce système d'armement comprend deux lumières 29 diamétralement opposées l'une par rapport à l'autre ménagées dans le moyeu 26 du manchon 3, comme montré à la figure 2. Ces deux lumières 29 reçoivent du trou diamétral 19 de l'arbre 1 la goupille 33 qui débouche à travers ces deux lumières 29.

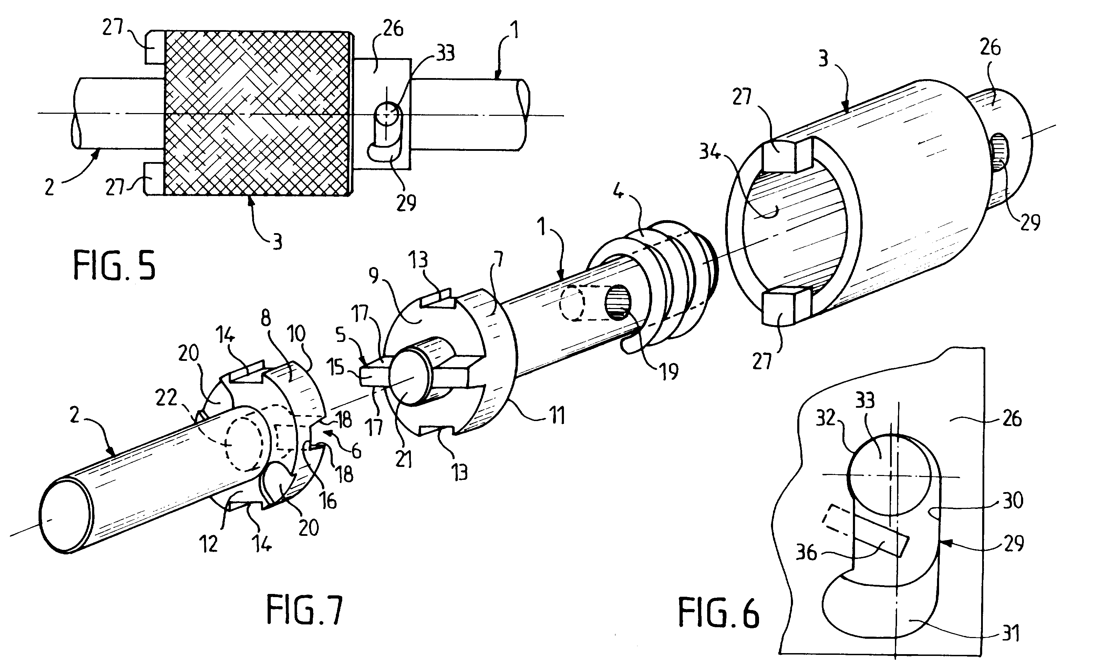

En référence à la figure 6, chacune des lumières 29 comporte un secteur circulaire 30 coaxial au manchon et dont l'une des extrémités se prolonge par un retour axial 31 et dont l'autre extrémité est munie d'une empreinte circulaire 32. Chaque retour axial 31 permet de libérer le système d'armement afin de laisser le ressort de compression 4 appliquer les deux plateaux circulaires 7 et 8 l'un contre l'autre en s'appuyant sur le manchon 3 par l'intermédiaire des deux tenons d'appui 27, ce qui correspond à la position fermée de la figure 4.

Lorsque l'ensemble monté sur l'arbre 1 se trouve en position de livraison, la goupille 33 vient à l'autre extrémité du secteur circulaire 30 dans l'empreinte circulaire 32 de manière à garantir le maintien du système d'armement, comme cela est représenté sur les figures 1, 2, 3 et 6.

Le dispositif d'accouplement de l'invention comporte en plus un système anti-retour axial, qui est constitué par un ergot 36 monté dans la lumière 29 comme cela est représenté sur la figure 6.

Afin de faciliter le montage du dispositif d'accouplement, celui-ci comporte un système d'indexation. Ce système d'indexation est constitué par la détermination de la longueur axiale du plateau circulaire 8 appartenant à l'arbre 2 à partir de l'ensemble monté sur l'arbre 1 lorsque cet ensemble est en position de livraison. Lorsque l'ensemble de l'arbre 1 est en position de livraison, le système d'armement est mis avec la goupille 33 dans l'arbre 1 qui s'appuie dans les empreintes circulaires 32 des lumières 29 du manchon 3. La longueur axiale du plateau circulaire 8 est alors déterminée de manière que ledit plateau 8 soit encore engagé dans les tenons d'appui 27 par l'intermédiaire des deux rainures axiales 14, lors de la présentation des dents 5 dans les encoches 6 correspondantes.

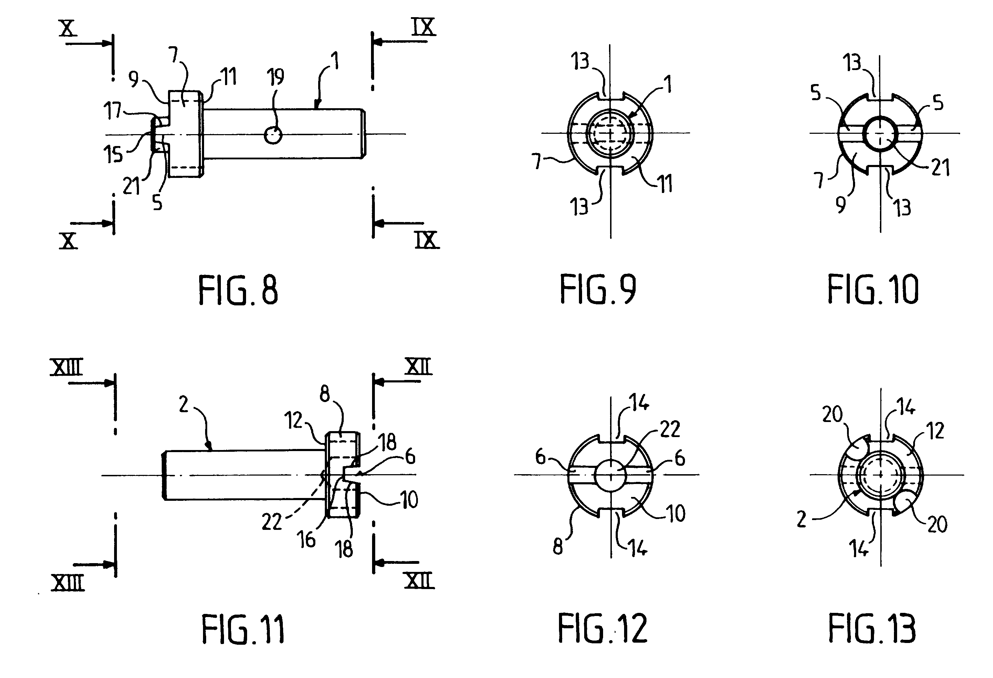

Pour que les deux arbres 1 et 2 soient correctement alignés l'un par rapport à l'autre, le dispositif d'accouplement comporte un système de centrage. Comme montré aux figures 7, 10 et 12, ce système de centrage comprend à l'extrémité de l'arbre 1 un embout circulaire 21. Cet embout circulaire 21 est destiné à rentrer dans un logement circulaire 22 aménagé à l'extrémité de l'autre arbre 2.

Dans une autre réalisation du système de centrage selon l'invention, la face circulaire externe de chacun des plateaux circulaires 7 et 8 appartenant respectivement aux arbres 1 et 2 s'ajuste dans la cavité cylindrique interne 34 du manchon 3.

Lorsque le dispositif d'accouplement est en position fermée, il est prévu un système de maintien dans la position fermée. Pour cela, la face externe 12 du plateau circulaire 8 appartenant à l'arbre 2 est munie de deux empreintes 20 qui sont diamétralement opposées. Ces empreintes 20 ont des dimensions qui correspondent aux dimensions des deux tenons d'appui 27. Ainsi, comme on peut le voir avec les figures 3 et 4, lorsque le dispositif d'accouplement passe de la position livraison à la position fermée, le manchon 3 tourne par rapport aux arbres 1 et 2, et les deux tenons d'appui 27 viennent s'engager dans les deux empreintes 20 correspondantes, ce qui maintient l'ensemble du dispositif d'accouplement en position fermée.

Le procédé de montage du dispositif d'accouplement des deux arbres 1 et 2 aptes à tourner suivant l'axe commun X-X comportant des moyens de liaison en rotation associés à des moyens de maintien axial est caractérisé en ce que l'arbre 1 portant le ressort de compression 4 est engagé dans le manchon 3. L'arbre 1 est alors relié avec le manchon 3 par la goupille 33 qui est montée dans le trou 19 de l'arbre 1 en traversant les deux lumières 29 qui sont ménagées sur le moyeu 26 du manchon 3. Chacune des lumières 29 comporte le secteur 30 dont l'une des extrémités se prolonge par le retour axial 31 et dont l'autre extrémité est munie de l'empreinte circulaire 32. La goupille 33 et les deux lumières 29 constituent le système d'armement du ressort de compression 4. Ce ressort de compression 4 est en position bloquée lorsque la goupille 33 est engagée dans l'empreinte circulaire 32 de chacune des lumières 29, ce qui correspond à la position de livraison. Le système d'armement du ressort de compression 4 est en position libre lorsque la goupille 33 est engagée dans le retour axial 31 de chacune des lumières 29, ce qui correspond à la position fermée du dispositif d'accouplement. Le dispositif d'accouplement est maintenu à cette position fermée par l'engagement des deux tenons d'appui 27 du manchon 3 dans les empreintes 20 aménagées sur la face externe 12 du plateau 8 de l'arbre 2 correspondant.

Selon le procédé de montage de l'invention, lorsque le manchon 3 est monté sur l'arbre 1 avec le ressort de compression 4 et que le système d'armement est en position bloquée, l'autre arbre 2 est engagé axialement dans le manchon 3 jusqu'à ce que les flans 17 des dents 5 de l'arbre 1 viennent s'appliquer contre les flans 18 des encoches 6 correspondantes de l'autre arbre 2. Les flans 17 et 18 restent ainsi en place les uns contre les autres sous l'action des moyens de maintien axial, qui agissent après libération du système d'armement par rotation du manchon 3. Cette rotation fait tourner les deux tenons d'appui 27, qui viennent s'engager dans les deux empreintes 20 aménagées dans l'extrémité de l'autre arbre 2, sur la face externe 12 afin de maintenir le dispositif d'accouplement en position fermée.

## Revendications

1. Dispositif d'accouplement des extrémités de deux arbres (1, 2) aptes à tourner suivant un axe commun (X-X),
comprenant au moins une dent (5) et au moins une encoche (6) solidaires respectivement des extrémités des deux arbres, étant agencées sur un plan sensiblement perpendiculairement à l'axe commun (X-X), et ayant des profils conjugués afin que la dent (5) s'engage dans l'encoche (6), et des moyens élastiques (4), qui retiennent les faces (9,10) des extrémités des arbres l'une contre l'autre
caractérisé en ce qu'il comprend en outre un manchon (3) entourant les extrémités des deux arbres (1, 2) et ayant des faces d'extrémité d'appui (24, 25) sensiblement perpendiculaires à l'axe commun (X-X), et
les moyens élastiques (4) sont situés à l'intérieur du manchon (3), s'appuient sur l'une (25) des faces d'extrémité d'appui du manchon (3) reliée axialement à l'un (1) des arbres, et appliquent les extrémités des deux arbres (1, 2) contre l'autre face d'extrémité d'appui (24) du manchon (3).

2. Dispositif d'accouplement selon la revendication 1, caractérisé en ce qu'il comporte un système d'armement (26, 29) les moyens élastiques (4) permettant de les maintenir en place lors de l'engagement de la dent (5) dans l'encoche (6).

3. Dispositif d'accouplement selon la revendication 2, caractérisé en ce que les moyens élastiques consistent en un ressort de compression (4) autour de l'un (1) des deux arbres.

4. Dispositif d'accouplement selon la revendication 2 ou 3, caractérisé en ce que le système d'armement comprend un moyeu (26) à l'extrémité du manchon (3) ayant la face d'extrémité d'appui (25) sur laquelle s'appuient les moyens élastiques (4), ledit moyeu (26) étant muni d'au moins une lumière (29), de façon qu'une goupille (33) montée dans l'arbre (1) correspondant débouche au travers ladite lumière (29).

5. Dispositif d'accouplement selon la revendication 4, caractérisé en ce que la lumière (29) comporte un secteur circulaire (30) dont l'une des extrémités se prolonge par un retour axial (31) permettant de libérer le système d'armement, afin de laisser les moyens élastiques (4) appliquer les extrémités des deux arbres (1, 2) l'une contre l'autre en s'appuyant sur le manchon (3).

6. Dispositif d'accouplement selon la revendication 5, caractérisé en ce qu'il comporte un système anti-retour axial (36).

7. Dispositif d'accouplement selon la revendication 6, caractérisé en ce que le système anti-retour axial comporte un ergot (36) monté dans la lumière (29).

8. Dispositif d'accouplement selon l'une quelconque des revendications 4 à 7, caractérisé en ce que le moyeu (26) du manchon (3) est muni de deux lumières (29) diamétralement opposées et coopérant avec la goupille (33).

9. Dispositif d'accouplement selon l'une quelconque des revendications 1 à 8, caractérisé en ce que :
- la face d'extrémité d'appui (24) du manchon (3) pour les extrémités des deux arbres (1, 2) est constituée par deux retours en forme de tenons d'appui (27) diamétralement opposés, et
- l'extrémité de chaque arbre (1, 2) est constituée par un plateau circulaire (7, 8) qui est muni de deux rainures axiales (13, 14) diamétralement opposées pour le passage des tenons d'appui (27) du manchon (3).

10. Dispositif d'accouplement selon les revendications 5 et 9, caractérisé en ce que la lumière (29) dans le manchon (3) a l'extrémité du secteur circulaire (30) située à l'opposé du retour axial (31), qui est munie d'une empreinte circulaire (32) pour garantir le maintien du système d'armement.

11. Dispositif d'accouplement selon la revendication 10, caractérisé en ce qu'il comporte un système d'indexation constitué par la détermination de la longueur axiale de l'un (8) des plateaux circulaires s'appuyant sur les tenons d'appui (27), de manière que l'autre plateau circulaire (7) étant en place avec le système d'armement mis avec la goupille (33) dans l'arbre (1) et dans l'empreinte circulaire (32) de la lumière (29) du manchon (3), ledit un plateau circulaire (8) ait ses rainures axiales (14) qui soient encore engagées dans les tenons d'appui (27) afin que les deux plateaux circulaires (7, 8) se présentent convenablement l'un par rapport à l'autre, lors de la présentation de la dent (5) dans l'encoche (6).

12. Dispositif d'accouplement selon l'une quelconque des revendications 9 à 11, caractérisé en ce qu'il comporte un système de maintien en position fermée.

13. Dispositif d'accouplement selon la revendication 12, caractérisé en ce que le système de maintien en position fermée consiste en des empreintes (20) diamétralement opposées sur une face externe (12) de l'un (8) des plateaux circulaires pour recevoir les deux tenons d'appui (27) du manchon (3) afin de maintenir le dispositif d'accouplement en position fermée.

14. Dispositif d'accouplement selon l'une quelconque des revendications 1 à 13, caractérisé en ce qu'il comporte un système de centrage.

15. Dispositif d'accouplement selon la revendication 14, caractérisé en ce que le système de centrage comprend à l'extrémité de l'un des deux arbres (1) un embout circulaire (21) destiné à rentrer et à s'ajuster dans un logement circulaire (22) ménagé à l'extrémité de l'autre arbre (2).

16. Dispositif d'accouplement selon les revendications 9 et 14, caractérisé en ce que le système de centrage est constitué par chacun des plateaux circulaires (7, 8) dont la face circulaire externe s'ajuste dans une cavité cylindrique interne (34) du manchon (3).

17. Dispositif d'accouplement selon l'une quelconque des revendications 1 à 16, caractérisé en ce que les arbres (1, 2) comportent deux dents diamétralement opposées (5) et deux encoches (6) diamétralement opposées s'engageant dans les dents.

18. Procédé de montage du dispositif d'accouplement de deux arbres (1, 2) aptes à tourner suivant un axe commun (X-X) selon l'une quelconque des revendications précédentes, caractérisé en ce que le manchon (3) est monté sur l'un des arbres (1) avec le ressort de compression (4) et son système d'armement en position bloquée, et que l'autre arbre (2) est engagé axialement jusqu'à ce que les flans (17) des dents (5) de l'un des arbres (1) viennent s'appliquer contre les flans (18) des encoches (6) correspondantes de l'autre arbre (2), et restent ainsi en place sous l'action du système de maintien axial après libération du système d'armement par rotation du manchon (3) afin que les deux tenons d'appui (27) du manchon (3) viennent s'engager dans les deux empreintes (20) ménagées dans l'extrémité de l'autre arbre (2) pour maintenir le dispositif d'accouplement en position fermée.

19. Procédé de montage selon la revendication 18, caractérisé en ce que l'arbre (1) portant le ressort de compression (4) est engagé dans le manchon (3) avec lequel il est relié par la goupille (33) qui est montée sur l'arbre (1) et qui traverse les deux lumières (29) ménagées sur le moyeu (26) du manchon (3), chacune des lumières (29) comportant un secteur circulaire (30), dont l'une des extrémités se prolonge par un retour axial (31) et dont l'autre extrémité est munie d'une empreinte circulaire (32) ; la goupille (33) et les deux lumières (29) constituant le système d'armement du ressort de compression (4) qui est en position bloquée lorsque la goupille (33) est engagée dans l'empreinte circulaire (32) de chacune des lumières (29), ce qui correspond à la position de livraison, et qui est en position libre lorsque la goupille (33) est engagée dans le retour axial (31) de chacune des lumières (29), ce qui correspond à la position fermée du dispositif d'accouplement, dont le maintien est garanti par l'engagement des deux tenons d'appui (27) du manchon (3) dans les empreintes (20) ménagées sur la face externe (12) du plateau (8) de l'arbre (2) correspondant.

20. Application du dispositif d'accouplement selon l'une quelconque des revendications précédentes à une colonne de direction de véhicule automobile.

## Patentansprüche

1. Vorrichtung zur Kupplung der Enden zweier Wellen (1, 2), die in der Lage sind, sich um eine gemeinsame Achse (X-X) zu drehen,
mindestens einen Zahn (5) und mindestens eine Aussparung (6) umfassend, die mit einem Ende jeweils einer der beiden Wellen fest verbunden sind, in einer Ebene angeordnet sind, die im wesentlichen senkrecht auf der gemeinsamen Achse (X-X) steht, und einander ergänzende Umrisse haben, damit der Zahn (5) in die Aussparung (6) eingreift, und elastische Mittel (4), die die Stirnflächen (9, 10) der Enden der Wellen gegeneinander halten,
dadurch gekennzeichnet, daß sie außerdem eine Hülse (3) umfaßt, die die Enden der beiden Wellen (1, 2) umgibt und Stützendflächen (24, 25) hat, die auf der gemeinsamen Achse (X-X) im wesentlichen senkrecht stehen, und
sich die elastischen Mittel (4) im Inneren der Hülse (3) befinden, sich auf der einen (25) der Stützendflächen der Hülse (3) abstützen, die axial mit einer (1) der Wellen verbunden ist und die Enden der beiden Wellen (1, 2) gegen die andere Stützendfläche (24) der Hülse (3) drücken.

2. Kupplungsvorrichtung nach Patentanspruch 1, dadurch gekennzeichnet, daß sie ein Spannsystem (26, 29) für die elastischen Mittel (4) enthält, das es erlaubt, sie beim Einfügen des Zahnes (5) in die Aussparung (6) an ihrem Platz zu halten

3. Kupplungsvorrichtung nach Patentanspruch 2, dadurch gekennzeichnet, daß die elastischen Mittel aus einer Druckfeder (4) um eine (1) der beiden Wellen bestehen.

4. Kupplungsvorrichtung nach Patentanspruch 2 oder 3, dadurch gekennzeichnet, daß das Spannsystem eine Nabe (26) an dem Ende der Hülse (3) umfaßt, das die Stützendfläche (25) aufweist, an dem sich die elastischen Mittel (4) abstützen, wobei diese Nabe (26) mit mindestens einer Öffnung (29) versehen ist, derart, daß ein entsprechender, in der Welle (1) angebrachter Stift (33) durch diese Öffnung (29) herausragt.

5. Kupplungsvorrichtung nach Patentanspruch 4, dadurch gekennzeichnet, daß die Öffnung (29) einen Kreisausschnitt (30) aufweist, dessen eines Ende sich in einem in Achsenrichtung abgeknickten Abschnitt (31) fortsetzt, der erlaubt, das Spannsystem zu lösen, um den elastischen Mitteln (4) zu ermöglichen, die Enden der beiden Wellen (1, 2) gegeneinander zu drücken, indem sie sich an der Hülse (3) abstützen.

6. Kupplungsvorrichtung nach Patentanspruch 5, dadurch gekennzeichnet, daß sie ein axiales Rückschlagsystem (36) aufweist.

7. Kupplungsvorrichtung nach Patentanspruch 6, dadurch gekennzeichnet, daß das axiale Rückschlagsystem eine Nase (36) umfaßt, die in der Öffnung (29) angebracht ist.

8. Kupplungsvorrichtung nach irgendeinem der Patentansprüche 4 bis 7, dadurch gekennzeichnet, daß die Nabe (26) der Hülse (3) mit zwei diametral gegenüberliegenden Öffnungen (29) versehen ist, die mit dem Stift (33) zusammenarbeiten.

9. Kupplungsvorrichtung nach irgendeinem der Patentansprüche 1 bis 8, dadurch gekennzeichnet, daß:
- die Stützendfläche (24) der Hülse (3) für die Enden der beiden Wellen (1, 2) aus zwei umgebogenen Kanten in Form von diametral gegenüberliegenden Stützzapfen (27) besteht, und
- das Ende jeder Welle (1, 2) aus einer kreisförmigen Scheibe (7, 8) besteht, die mit zwei diametral gegenüberliegenden Rillen in Achsenrichtung (13, 14) für den Durchtritt der Stützzapfen (27) der Hülse (3) versehen ist.

10. Kupplungsvorrichtung nach den Patentansprüchen 5 und 9, dadurch gekennzeichnet, daß die Öffnung (29) in der Hülse (3) an dem Ende des Kreisausschnittes (30), der dem in Achsenrichtung abgeknickten Abschnitt (31) gegenüberliegt, mit einer kreisförmigen Eindrückung (32) versehen ist, um ein stabiles Halten des Spannsystems sicherzustellen.

11. Kupplungsvorrichtung nach Patentanspruch 10, dadurch gekennzeichnet, daß sie ein Indexiersystem aufweist, das in der Festlegung der axialen Länge einer (8) der kreisförmigen Scheiben besteht, die gegen den Stützzapfen (27) drücken, derart, daß die axialen Rillen (14) der genannten kreisförmigen Scheibe (8) noch mit den Stützzapfen (27) in Eingriff stehen, wenn die andere kreisförmige Scheibe (7) an ihrem Platz ist mit in die Welle (1) eingesetztem und sich in der kreisförmigen Eindrückung (32) der Öffnung (29) der Hülse (3) befindendem Stift (33), damit die beiden kreisförmigen Scheiben (7, 8) in geeigneter Weise einander gegenüber liegen, wenn der Zahn (5) sich der Aussparung (6) gegenüber befindet.

12. Kupplungsvorrichtung nach irgendeinem der Patentansprüche 9 bis 11, dadurch gekennzeichnet, daß sie ein System zum Halten in geschlossener Stellung aufweist.

13. Kupplungsvorrichtung nach Patentanspruch 12, dadurch gekennzeichnet, daß das System zum Halten in geschlossener Stellung aus Eindrückungen (20) besteht, die sich einander diametral gegenüber auf einer Außenseite (12) der einen (8) der kreisförmigen Scheiben befinden, um die beiden Stützzapfen (27) der Hülse (3) aufzunehmen, um die Kupplungsvorrichtung in der geschlossenen Stellung zu halten.

14. Kupplungsvorrichtung nach irgendeinem der Patentansprüche 1 bis 13, dadurch gekennzeichnet, daß sie ein Zentriersystem aufweist.

15. Kupplungsvorrichtung nach Patentanspruch 14, dadurch gekennzeichnet, daß das Zentriersystem am Ende einer der beiden Wellen (1) einen kreisförmigen Ansatz (21) umfaßt, der dazu bestimmt ist, in eine kreisförmige Aufnahme (22) einzudringen und sich einzupassen, die an Ende der anderen Welle (2) vorgesehen ist.

16. Kupplungsvorrichtung nach den Patentansprüchen 9 und 14, dadurch gekennzeichnet, daß das Zentriersystem aus jeder der kreisförmigen Scheiben (7, 8) besteht, deren kreisförmige Außenseite sich einem inneren zylindrischen Hohlraum (34) der Hülse (3) einpaßt.

17. Kupplungsvorrichtung nach irgendeinem der Patentansprüche 1 bis 16, dadurch gekennzeichnet, daß die Wellen (1, 2) zwei einander diametral gegenüberliegende Zähne (5) aufweisen und zwei einander diametral gegenüberliegende Aussparungen (6), die mit den Zähnen in Eingriff gelangen.

18. Verfahren zur Montage der Vorrichtung zur Kupplung zweier Wellen (1, 2), die in der Lage sind, sich um eine gemeinsame Achse (X-X) zu drehen, nach irgendeinem der vorangehenden Patentansprüche, dadurch gekennzeichnet, daß die Hülse (3) mit der Druckfeder (4) und ihrem Spannsystem in Sperrstellung auf eine der Wellen (1) montiert ist und daß die andere Welle (2) in Achsenrichtung soweit eingreift, daß die Flanken (17) der Zähne (5) einer der Wellen (1) sich an die Flanken (18) der entsprechenden Aussparungen (6) der anderen Welle (2) anlegen und so unter der Einwirkung des Systems zum Halten in Achsenrichtung nach Freigabe des Spannsystems durch Drehung der Hülse (3) in Stellung bleiben, damit die beiden Stützzapfen (27) der Hülse (3) in die beiden Eindrückungen (20) eingreifen, die im Ende der anderen Welle (2) angeordnet sind, um die Kupplungsvorrichtung in der geschlossenen Stellung zu halten.

19. Montageverfahren nach Patentanspruch 18, dadurch gekennzeichnet, daß die die Druckfeder (4) tragende Welle (1) in die Hülse (3) eingreift, mit der sie durch den Stift (33) verbunden ist, der auf der Welle (1) angebracht ist und durch die beiden Öffnungen (29) hindurchtritt, die in der Nabe (26) der Hülse (3) angeordnet sind, wobei jede der Öffnungen (29) einen Kreisausschnitt (30) aufweist, dessen eines Ende sich in einem in Achsenrichtung abgeknickten Abschnitt (31) fortsetzt und dessen anderes Ende mit einer kreisförmigen Eindrückung (32) versehen ist, wobei der Stift (33) und die beiden Öffnungen (29) das Spannsystem der Druckfeder (4) darstellen, das sich in der Sperrstellung befindet, wenn der Stift (33) in die kreisförmige Eindrückung (32) jeder der Öffnungen (29) eingreift, was der Lieferungsstellung entspricht, und das sich in der freien Stellung befindet, wenn der Stift (33) in den in Achsenrichtung abgeknickten Abschnitt (31) jeder der Öffnungen (29) eingreift, was der geschlossenen Stellung der Kupplungsvorrichtung entspricht, deren stabiles Halten durch Eingreifen der beiden Stützzapfen (27) der Hülse (3) in die Eindrückungen (20) sichergestellt wird, die auf der Außenseite (12) der Scheibe (8) der entsprechenden Welle (2) angebracht ist.

20. Anwendung der Kupplungsvorrichtung nach irgendeinem der vorangehenden Patentansprüche in der Lenksäule eines Kraftfahrzeuges.

## Claims

1. A coupling device for coupling ends of two shafts (1, 2) rotatable about a common axis (X-X),
comprising at least one tooth (5) and at least one notch (6) respectively integral with ends of the two shafts, being disposed on a plane substantially perpendicularly to the common axis (X-X), and having conjugate profiles so that the tooth (5) engages in the notch (6), and spring means (4) which retain the faces (9, 10) of the ends of the shafts against each one another,
characterized in that it further comprises a sleeve (3) surrounding the ends of the two shafts (1, 2) and having bearing end faces (24, 25) substantially perpendicular to the common axis (X-X), and
- the spring means (4) are located inside the sleeve (3), bear on one (25) of the bearing end faces of the sleeve (3) coupled axially to one (1) of the shafts, and press the ends of the two shafts (1,2) against the other bearing end face (24) of the sleeve (3).

2. A coupling device according to claim 1, characterized in that it comprises an arming system (26, 29) for the spring means (4) adapted to hold the latter in place during the engagement of the tooth (5) in the notch (6).

3. A coupling device according to claim 2, characterized in that the spring means comprise a compression spring (4) about of one (1) of the two shafts.

4. A coupling device according to claim 2 or 3, characterized in that the arming system comprises a hub (26) at the end of the sleeve (3) having the bearing end face (25) against which the spring means (4) bear, said hub (26) including at least one slot (29) so that a pin (33) mounted in the corresponding shaft (1) projects through said slot (29).

5. A coupling device according to claim 4, characterized in that the slot (29) includes a circular sector (30), one of the ends of which extends by an axial section (31) for releasing the arming system to enable the spring means (4) to press the ends of the two shafts (1, 2) together by bearing on the sleeve (3).

6. A coupling device according to claim 5, characterized in that it comprises an axial non-return system (36).

7. A coupling device according to claim 6, characterized in that the axial non-return system includes a stop pin (36) mounted in the slot (29).

8. A coupling device according to any one of claims 4 to 7, characterized in that the hub (26) of the sleeve (3) has two diametrally opposed slots (29) cooperating with the pin (33).

9. A coupling device according to any one of the claims 1 to 8, characterized in that :
- the bearing end face (24) of the sleeve (3) for the ends of the two shafts (1, 2) is constituted by two protusions in the form of diametrally opposed bearing lugs (27), and
- the end of each shaft (1, 2) is constituted by a circular plate (7, 8) which has two diametrally opposed axial grooves (13, 14) forming a passing for the bearing lugs (27) of the sleeve (3).

10. A coupling device according to the claims 5 and 9, characterized in that the slot (29) in the sleeve (3) has the end of the circular sector (30) opposite the axial section (31) which is provided with a circular imprint (32) to ensure the holding of the arming system.

11. A coupling device according to claim 10, characterized in that it comprises an indexing system consisting in the determination of the axial length of one (8) of the circular plates bearing on the bearing lugs (27) so that the other circular plate (7) being in place with the arming system set with the pin (33) in the shaft (1) and in the circular imprint (32) of the slot (29) of the sleeve (3), said one circular plate (8) has its axial grooves (14) which are still engaged with the bearing lugs (27) so that the two circular plates (7, 8) are offered up to each other appropriately on offering up the tooth (5) to the notch (6).

12. A coupling device according to any one of claims 9 to 11, characterized in that it comprises a system for holding in a closed position.

13. A coupling device according to claim 12 characterized in that the system for holding in a closed position comprises diametrally opposed imprints (20) on an outside face (12) of the one (8) of the circular plates for accommodating the two bearing lugs (27) of the sleeve (3) to thereby holding the coupling device in a closed position.

14. A coupling device according to any one of claims 1 to 13, characterized in that it comprises a centering system.

15. A coupling device according to claim 14, characterized in that the centering system comprises a circular end-piece (21) at the end of the of the two shafts (1) adapted to enter and fit into a circular housing (22) made at the end of the other shaft (2).

16. A coupling device according to claims 9 and 14, characterized in that the centering system is constituted by each of the circular plates (7, 8), the outside circular face of which fits in an inside cylindrical recess (34) of the sleeve (3).

17. A coupling device according to any one of claims 1 to 16, characterized in that the shafts (1, 2) include two diametrally opposed teeth (5) and two diametrally opposed notches (6) engaging with the teeth.

18. A mounting method of the coupling device of two shafts (1, 2) rotatable about a common axis (X-X) according to any one of preceding claims, characterized in that the sleeve (3) is mounted on one of the shafts (1) with the compression spring (4) and its arming system in a locked position, and that the other shaft (2) is axially engaged until the sides (17) of the teeth (5) of one of the shafts (1) are applied against the sides (18) of the corresponding notches (6) of the other shaft (2), and remain thus in place on the action of the axial bearing system after releasing of the arming system by rotating the sleeve (3), so that the two bearing lugs (27) of the sleeve (3) are engaging in the two imprints (20) in the end of the other shaft (2) to hold the coupling device in a closed position.

19. A mounting method according to claim 18, characterized in that the shaft (1) bearing the compression spring (4) is engaged in the sleeve (3) with which it is connected by the pin (33) which is mounted on the shaft (1) and which passes through the two slots (29) made in the hub (26) of the sleeve (3), each of the slots (29) including a circular sector (30), one of the ends of which extends by an axial section (31) and the other end of which is provided with a circular imprint (32) ; the pin (33) and the two slots (29) constituting the arming system of the compression spring (4) being at the locked position when the pin (33) is engaged in the circular imprint (32) of each of the slots (29), which corresponds to the shipping position, and which is in free position when the pin (33) is engaged in the axial section (31) of each of the slots (29), which corresponds to the closed position of the coupling device, the holding of which is guaranteed by the engagement of the two bearing lugs (27) of the sleeve (3) in the imprints (20) made on an outside face (12) of the plate (8) of the corresponding shaft (2).

20. An application of the coupling device according to any one of the preceding claims to an automobile vehicle steering column.
